# EUROPEAN PATENT APPLICATION

(11) **EP 4 796 808 A1**
(43) Date of publication of application: **26.08.2026**
(21) Application number: 24879378.8
(22) Date of filing: 28.06.2024
(51) Int. Cl.: F16F 15/08, F16J 15/18

(54) **VIBRATION ISOLATION STRUCTURE**

(30) Priority: 17.10.2023 JP 2023179108
(71) Applicant: Prospira Corporation, Kanagawa prefecture 212-0013 (JP)
(72) Inventor: OTSU, Kazutaka, Kawasaki city, Kanagawa 212-0013 (JP)
(74) Representative: V.O.
(86) International application number: PCT/JP2024/023604
(87) International publication number: WO 2025/083947

(57) **Abstract**

Provided is an anti-vibration structure in which the number of components can be reduced and deterioration of durability can be suppressed. This anti-vibration structure 1 includes: an inner cylinder 2; an outer cylinder 3; a body rubber 4 disposed between the inner cylinder and the outer cylinder; and a pair of seal members 6 which are provided on the outer peripheral surface of the inner cylinder on both sides of the body rubber in the axial direction and each of which is made from an elastic body and has a cylindrical shape. The inner peripheral surface of the body rubber is not bonded to the inner cylinder but is in contact therewith. Each seal member has a body part 61 positioned on the outer peripheral surface of the inner cylinder, and a lip part 62 extending inward from the body part in the axial direction and coming into contact with an outer surface of the body rubber in the axial direction.

## Description

### Technical Field

The present invention relates to an anti-vibration structure.

### Background Art

There is conventionally provided an anti-vibration structure formed as a slide bush (for example, Patent Literature 1).

### Citation List

### Patent Literature

Patent Literature 1: Japanese Unexamined Patent Application Publication No. Hei 6-126861

### Summary of Invention

### Technical Problem

The generally employed anti-vibration structure is provided with a low-friction member (for example, a resin member with low frictional coefficient) in a slide part, and further provided with seal members on both sides of the low-friction member in the axial direction, however. The resultant number of components is increased, leading to complication of the structure.

The following describes possible measures for reducing the number of components. For example, only a part of an inner peripheral surface of a body rubber in the axial direction is prevented from being bonded to an inner cylinder to impart slidability to the part (non-bonded part). Furthermore, seal performance is attained by the other part (bonded part) of the inner peripheral surface of the body rubber, which is bonded to the inner cylinder on both sides of the non-bonded part in the axial direction. In the above case, upon displacement in the twist direction at a large torsional angle, the strain amount of the body rubber is increased in the area near the bonded part by expansion and contraction of the body rubber, resulting in concerns about durability.

An object of the present invention is to provide the anti-vibration structure that is able to reduce the number of components, and to suppress the durability deterioration.

### Solution to Problem

[1] A anti-vibration structure includes an inner cylinder, an outer cylinder, a body rubber disposed between the inner cylinder and the outer cylinder, and a pair of seal members which are provided on an outer peripheral surface of the inner cylinder on both sides of the body rubber in an axial direction, each of which is made from an elastic body and has a cylindrical shape. An inner peripheral surface of the body rubber is not bonded to the inner cylinder, but is in contact with the inner cylinder. Each of the seal members has a body part positioned on the outer peripheral surface of the inner cylinder, and a lip part which extends axially inward from the body part, and comes into contact with an axially outer surface of the body rubber.
   This makes it possible to reduce the number of components, and to suppress the durability deterioration.
[2] In the anti-vibration structure as described in [1], an inner peripheral surface of the lip part of each of the seal members extends to an outer peripheral side while being directed axially inward, and comes into surface contact with the axially outer surface of the body rubber.
   This makes it possible to improve the seal performance of the seal member.
[3] In the anti-vibration structure as described in [1] or [2], the outer peripheral surface of the inner cylinder has a pair of engaged parts on both sides of the body rubber in the axial direction. Inner peripheral surfaces of the body parts of the seal members include engaging parts to be engaged with the corresponding engaged parts, respectively.
   This makes it possible to effectively suppress the lateral displacement of the seal member in the axial direction.
[4] The anti-vibration structure as described in any one from [1] to [3] further includes a pair of band members provided on each outer peripheral surface of or inside the body parts of the pair of seal members.
   This makes it possible to effectively suppress the lateral displacement of the seal member in the axial direction.
[5] In the anti-vibration structure as described in any one from [1] to [4], each of the seal members further includes a collar part extending to an outer peripheral side from the body part. The collar part of each of the seal members is structured to come into contact with an axially outer surface of the outer cylinder.
   This makes it possible to suppress splashes of muddy water or hitting of pebbles on the lip part.
[6] In the anti-vibration structure as described in any one from [1] to [5], the outer peripheral surface of the inner cylinder has a pair of circumferential grooves each extending in a circumferential direction. The inner peripheral surface of the body rubber has a pair of projection parts structured to be fitted with the pair of circumferential grooves, respectively on axially outer end parts.
   This makes it possible to further effectively suppress separation of the lip part of the seal member from the axially outer surface of the body rubber upon the prying displacement.
[7] In the anti-vibration structure as described in any one from [1] to [6], the outer peripheral surface of the inner cylinder has a bulge shape part with a bulge shape projecting to an outer peripheral side on an inner peripheral side of the body rubber.
   This makes it possible to suppress the lateral displacement of the body rubber in the axial direction with respect to the inner cylinder.
[8] The anti-vibration structure as described in any one from [1] to [7] is formed as a bush used for a link mechanism of a suspension system.

### Advantageous Effects of Invention

This invention is able to provide an anti-vibration structure in which the number of components can be reduced and deterioration of durability can be suppressed.

### Brief Description of Drawings

Fig. 1 is an axial cross-section schematically illustrating an anti-vibration structure according to a first embodiment of the present invention.
Fig. 2 is an axial cross-section schematically illustrating a seal member in a natural state as illustrated in Fig. 1.
Fig. 3 is an axial cross-section schematically illustrating an anti-vibration assembly provided with the anti-vibration structure as illustrated in Fig. 1.
Fig. 4 is an explanatory view of an operating state of the anti-vibration structure and the anti-vibration assembly as illustrated in Fig. 3 upon displacement of the inner cylinder in the prying direction.
Fig. 5 is an axial cross-section schematically illustrating the anti-vibration structure according to a second embodiment of the present invention.
Fig. 6 is an axial cross-section schematically illustrating the anti-vibration structure according to a third embodiment of the present invention.
Fig. 7 is an axial cross-section schematically illustrating the anti-vibration structure according to a fourth embodiment of the present invention.
Fig. 8 is an axial cross-section schematically illustrating the anti-vibration structure according to a fifth embodiment of the present invention.
Fig. 9 is an axial cross-section schematically illustrating the anti-vibration assembly provided with the anti-vibration structure according to a sixth embodiment of the present invention.
Fig. 10 is an axial cross-section schematically illustrating a seal member in the natural state as illustrated in Fig. 9.

### Description of Embodiments

Preferably, the anti-vibration structure according to the present invention is applied to a vehicle suspension system, for example, MacPherson strut suspension system. Preferably, for example, the anti-vibration structure according to the present invention is formed as a bush used for a link mechanism (suspension link arm and the like) of the vehicle suspension system (for example, Macpherson strut suspension system). However, the anti-vibration structure may be provided for a strut mount of the vehicle suspension system (for example, Macpherson strut suspension system).

Embodiments of the anti-vibration structure according to the present invention will be described as examples with reference to the drawings.

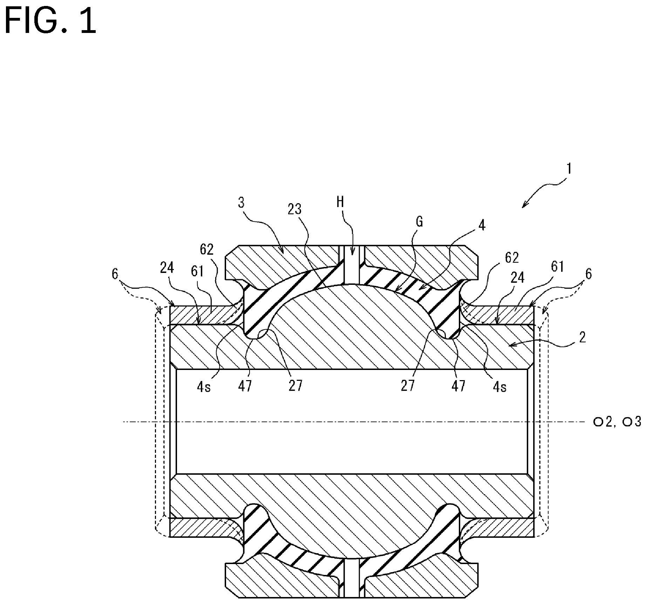

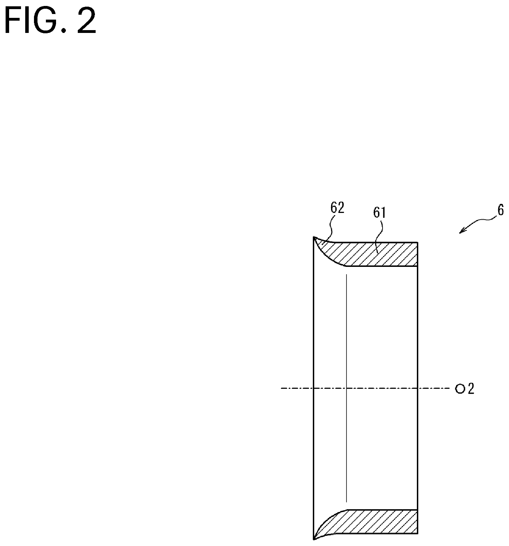

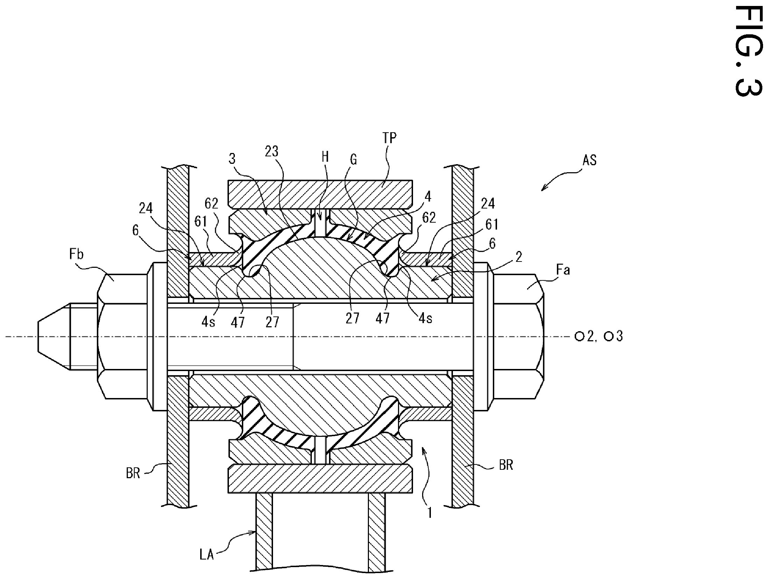

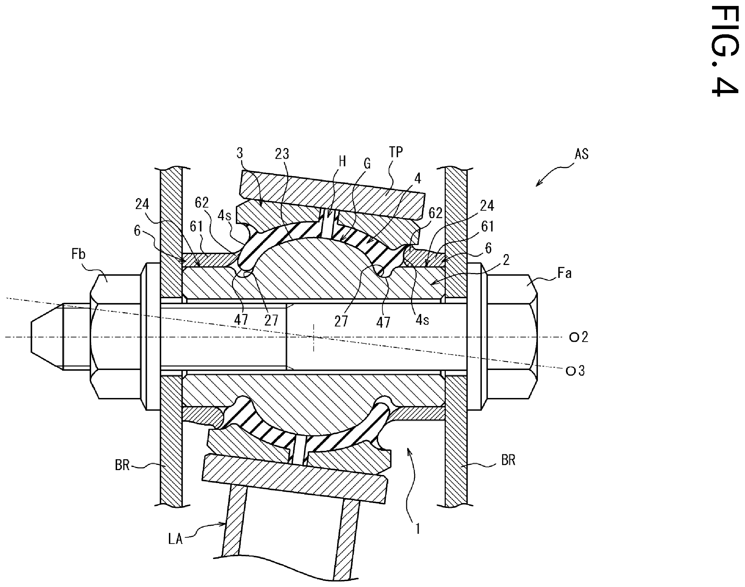

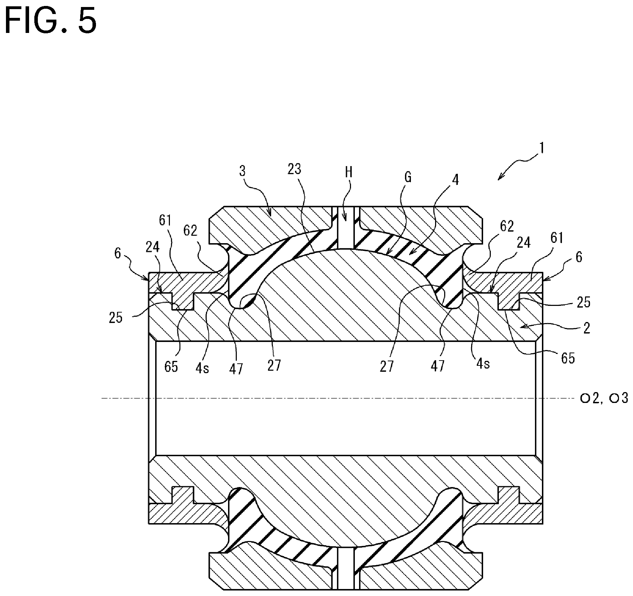

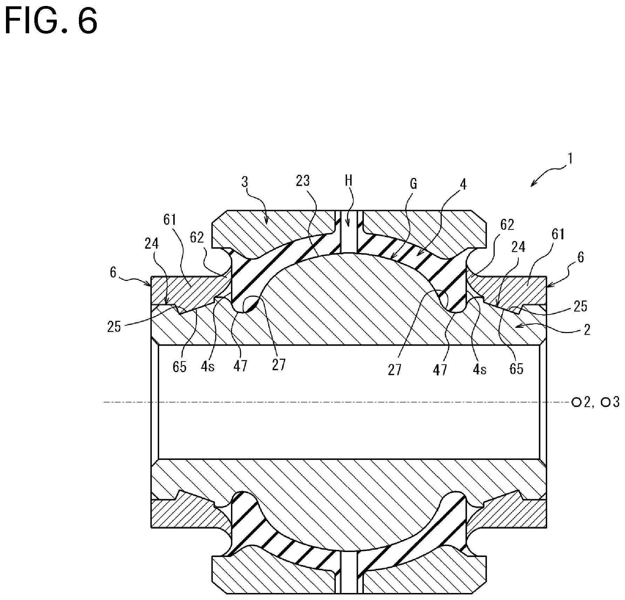

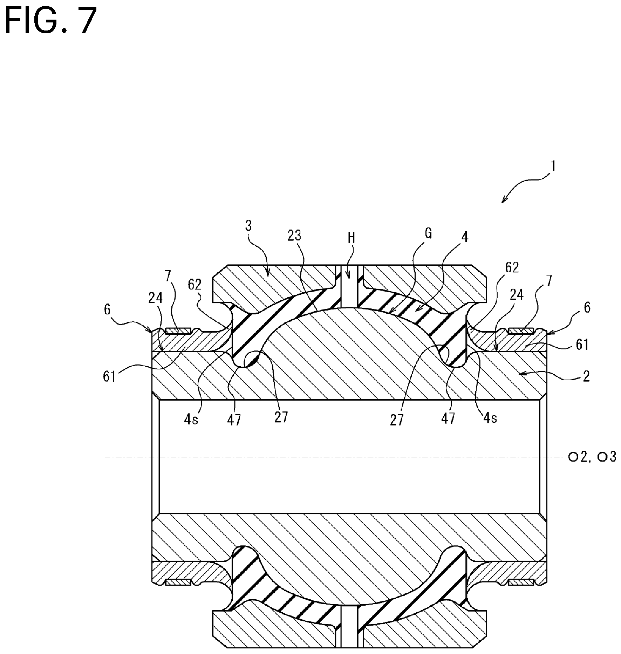

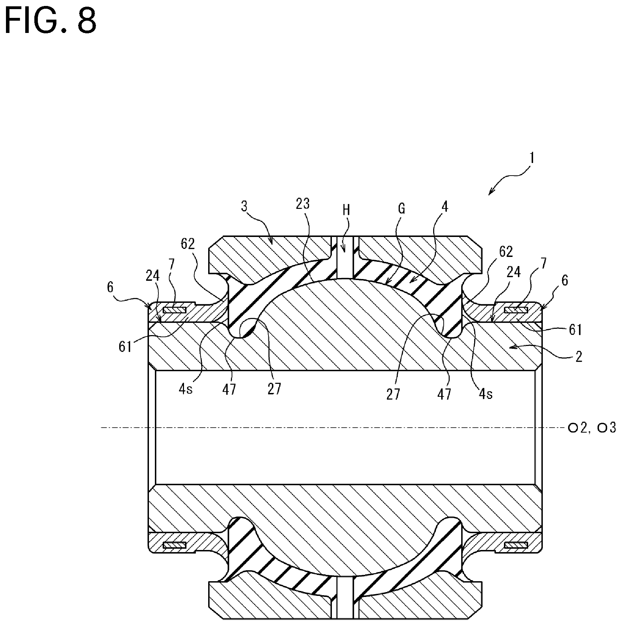

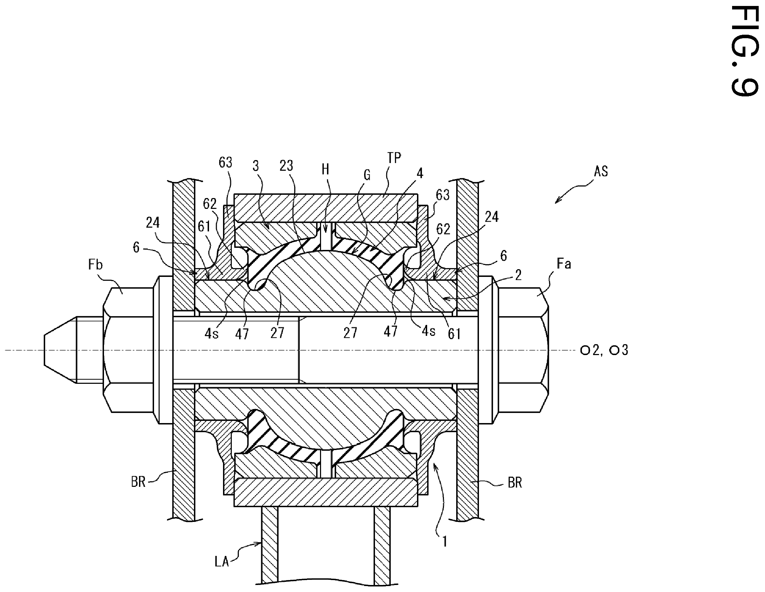

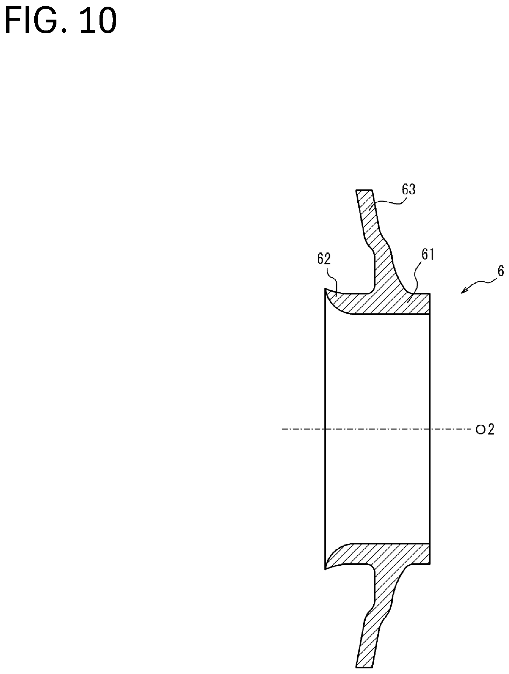

Figs. 1 to 10 are views for explaining an anti-vibration structure 1 according to the first to the sixth embodiments of the present invention. Fig. 1 is an axial cross-section schematically illustrating the anti-vibration structure according to the first embodiment of the present invention. Fig. 2 is an axial cross-section schematically illustrating a seal member 6 in a natural state as illustrated in Fig. 1. Fig. 3 is an axial cross-section schematically illustrating an anti-vibration assembly AS provided with the anti-vibration structure 1 as illustrated in Fig. 1. Fig. 4 is an explanatory view of an operating state of the anti-vibration structure 1 and the anti-vibration assembly AS as illustrated in Fig. 3 upon displacement of the inner cylinder in the prying direction. Fig. 5 is an axial cross-section schematically illustrating the anti-vibration structure 1 according to a second embodiment of the present invention. Fig. 6 is an axial cross-section schematically illustrating the anti-vibration structure 1 according to a third embodiment of the present invention. Fig. 7 is an axial cross-section schematically illustrating the anti-vibration structure 1 according to a fourth embodiment of the present invention. Fig. 8 is an axial cross-section schematically illustrating the anti-vibration structure 1 according to a fifth embodiment of the present invention. Fig. 9 is an axial cross-section schematically illustrating the anti-vibration structure 1 according to a sixth embodiment of the present invention. Fig. 10 is an axial cross-section schematically illustrating the seal member 6 in the natural state as illustrated in Fig. 9.

The following describes those embodiments in parallel for convenience of explanation. Unless otherwise specifically noted, the following details are regarded as those applicable to the respective examples to be described in the specification.

Preferably, the anti-vibration structure 1 according to the respective embodiments as described in the specification is applied to the vehicle suspension system, for example, MacPherson strut suspension system. The anti-vibration structure 1 according to the respective embodiments is formed as a bush to be used for the link mechanism (suspension link arm or the like) of the vehicle suspension system. The anti-vibration structure 1 according to the respective embodiments as described in the specification may be provided on a strut mount of the vehicle suspension system (for example, MacPherson strut suspension system).

In this specification, unless otherwise specifically noted, for convenience of explanation, the anti-vibration structure 1 and/or an anti-vibration assembly AS will be described with respect to the structure of the anti-vibration structure 1 and/or the anti-vibration assembly AS in the normal static state (in the specification, "natural state") where there is no input nor external force exerted to the anti-vibration structure 1 and/or the anti-vibration assembly AS as illustrated in Figs. 1, 3, and 5 to 9.

As illustrated in Figs. 1, 3, 5 to 9, the anti-vibration structure 1 and/or the anti-vibration assembly AS is in the natural state.

The anti-vibration structure 1 includes an inner cylinder 2, an outer cylinder 3, a body rubber 4, and a pair of seal members 6 (Figs. 1, 3, 5 to 9).

Each of the inner cylinder 2 and the outer cylinder 3 has a tubular shape. In the respective embodiments, the inner cylinder 2 and the outer cylinder 3 are substantially cylindrically shaped. They may also be tubularly shaped other than the substantially cylindrically shaped. The outer cylinder 3 is positioned on the outer peripheral side of the inner cylinder 2. The inner cylinder 2 is disposed coaxially with the outer cylinder 3. In other words, a center axis O2 of the inner cylinder 2 corresponds with a center axis O3 of the outer cylinder 3.

Examples of the material for forming the inner cylinder 2 and the outer cylinder 3 include, but are not limited to, metal and/or resin.

The inner cylinder 2 extends axially outward from a pair of axially outer surfaces 4s of the body rubber 4, respectively (Figs. 1, 3, 5 to 9).

In the specification, the center axis O2 of the inner cylinder 2 will be regarded as a center axis O2 of the anti-vibration structure 1. In the specification, unless otherwise specifically noted, the direction parallel to the center axis O2 of the anti-vibration structure 1 is specified as an "axial direction". The side distant from the center of the anti-vibration structure 1 in the axial direction is specified as an "axially outward", and the side close to the center of the anti-vibration structure 1 in the axial direction is specified as an "axially inward". The direction orthogonal to the center axis O2 of the anti-vibration structure 1 is specified as an "axially orthogonal direction". The side close to the center axis O2 of the anti-vibration structure 1 is specified as an "inner peripheral side", and the side distant from the center axis O2 of the anti-vibration structure 1 is specified as an "outer peripheral side". The circumferential direction with respect to the center axis O2 of the anti-vibration structure 1 is specified as a "circumferential direction", and a radial direction with respect to the center axis O2 of the anti-vibration structure 1 is specified as a "radial direction".

In the embodiments as illustrated in the respective drawings, the axial direction of the anti-vibration structure 1 is oriented to a substantially horizontal direction. The axial direction of the anti-vibration structure 1 may be oriented to an arbitrary direction.

The body rubber 4 is made of rubber. The body rubber 4 is disposed between the inner cylinder 2 and the outer cylinder 3 in the radial direction. The body rubber 4 extends over an entire area between the inner cylinder 2 and the outer cylinder 3, and is tubularly formed.

The body rubber 4 is positioned on the axial center of the inner cylinder 2.

The outer peripheral surface of the body rubber 4 is bonded to the inner peripheral surface of the outer cylinder 3. Preferably, a part of the body rubber 4, which is in contact with the outer cylinder 3 is entirely bonded thereto. The body rubber 4 and the outer cylinder 3 may be bonded together by an arbitrary method, for example, such process as vulcanization bonding and/or bonding with adhesive.

The inner peripheral surface of the body rubber 4 is not bonded to the inner cylinder 2 entirely (specifically, the outer peripheral surface of the inner cylinder 2). The inner peripheral surface of the body rubber 4 is made slidable entirely on the inner cylinder 2 (specifically, the outer peripheral surface of the inner cylinder 2).

The inner peripheral surface of the body rubber 4 is entirely in contact with the inner cylinder 2 (specifically, the outer peripheral surface of the inner cylinder 2).

In the specification, the "contact state" between the body rubber 4 and the inner cylinder 2 includes the case where the lubricant (not shown) intervenes between the body rubber 4 and the inner cylinder 2 as well as the case where the body rubber 4 and the inner cylinder 2 are directly in contact with each other while having nothing intervening therebetween except the case where the member other than the lubricant or air intervenes between the body rubber 4 and the inner cylinder 2.

In the specification, a gap between the body rubber 4 and the inner cylinder 2 may be specified as a "gap G" for convenience of explanation. Actually, as the body rubber 4 and the inner cylinder 2 are in contact with each other, the gap G is in a substantially or completely closed state.

The bush formed as the anti-vibration structure 1 according to the respective embodiments to be described in the specification (Figs. 1, 3, 5, 6, 7, 8, 9) may be referred to as a so-called "slide bush" because the body rubber 4 is slidable with respect to the inner cylinder 2 as described above.

A pair of seal members 6 are positioned on both sides of the body rubber 4 in the axial direction.

Each of the paired seal members 6 is similarly structured. In the specification, unless otherwise specifically noted, the seal member 6 will be described with respect to each of the respective seal members 6.

The seal member 6 is disposed on the outer peripheral surface of the inner cylinder 2. The seal member 6 is disposed coaxially with the inner cylinder 2.

The seal member 6 is made of an elastic body. Examples of the elastic body constituting the seal member 6 include, for example, rubber, resin, metal, and the like. Especially, it is preferable to use rubber or resin.

The seal member 6 is a fully integrated structure (that is, constituted by a single component).

The seal member 6 has a tubular shape. In the respective embodiments, the seal member 6 has a substantially cylindrical shape. However, it may be formed into a tubular shape other than the substantially cylindrical shape.

The seal member 6 includes a body part 61 and a lip part 62.

The body part 61 is tubularly shaped, and positioned on the outer peripheral surface of the inner cylinder 2. The body part 61 has its inner peripheral surface in contact with the outer peripheral surface of the inner cylinder 2. The body part 61 functions to hold (fix) the seal member 6 onto the inner cylinder 2.

The lip part 62 extends axially inward from the body part 61. The lip part 62 is structured to come into contact with the axially outer surface 4s of the body rubber 4 entirely. The lip part 62 functions to seal the gap G between the inner cylinder 2 and the body rubber 4.

The elastic body that constitutes the seal member 6 may have its hardness equal to or greater than the hardness of the body rubber 4. This makes it possible to improve the seal performance of the seal member 6.

Alternatively, the elastic body that constitutes the seal member 6 may have its hardness lower than the hardness of the body rubber 4. In the above case, for example, when the inner cylinder 2 is shaken with respect to the outer cylinder 3 in the prying direction (Fig. 4), it is possible to alleviate the risk that the press force applied by the lip part 62 of the seal member 6 scrapes off the body rubber 4, resulting in improved durability of the body rubber 4.

Preferably, the elastic body that constitutes the seal member 6 contains the lubricant (self-lubricating rubber etc.).

The following describes the procedure for manufacturing the anti-vibration structure 1. For example, firstly, the part of the anti-vibration structure 1, which includes the inner cylinder 2, the body rubber 4, and the outer cylinder 3 is molded through the vulcanization process. The pair of seal members 6 are then inserted axially inward from the axially outer side on the outer peripheral surface of the inner cylinder 2 on both sides of the body rubber 4 in the axial direction such that they are assembled.

An example of the method of manufacturing the anti-vibration structure 1 will be described in more detail as below.

As illustrated in Figs. 3 and 9, the anti-vibration structure 1 according to the respective embodiments of the present invention may be provided for the anti-vibration assembly AS. The anti-vibration assembly AS is used for the link mechanism of the vehicle suspension system (for example, MacPherson strut suspension system). In this case, the anti-vibration structure 1 is connected between a pair of brackets BR and a suspension link arm LA. The anti-vibration assembly AS includes the anti-vibration structure 1 according to any one of the embodiments of the present invention, the pair of brackets BR, and the suspension link arm LA.

The pair of brackets BR are connected to a not shown vehicle body. The pair of brackets BR are disposed on both sides of the anti-vibration structure 1 in the axial direction, respectively. More specifically, the pair of brackets BR are fixed to the inner cylinder 2 by fasteners such as a bolt Fa and a nut Fb while being abutted on the respective end surfaces of the inner cylinder 2 on both sides in the axial direction. As examples are illustrated in Figs. 3 and 9, the bolt Fa has its shank inserted through a center hole of the inner cylinder 2. One of the paired brackets BR is held between an end surface of the inner cylinder 2 on one side in the axial direction and a head of the bolt Fa. The other of the paired brackets BR is held between an end surface of the inner cylinder 2 on the other side in the axial direction and the nut Fb.

The suspension link arm LA includes a tubular part TP. The anti-vibration structure 1 has its part corresponding to the body rubber 4 in the axial direction (the part constituted by the inner cylinder 2, the body rubber 4, and the outer cylinder 3) press-fitted with an inner peripheral surface of the tubular part TP. Referring to examples as illustrated in Figs. 3 and 9, the pair of seal members 6 extend axially outward from the tubular part TP of the suspension link arm LA.

The pair of seal members 6 are positioned between the body rubber 4 and the pair of brackets BR in the axial direction. This makes it possible to suppress the pair of seal members 6 from being laterally displaced on the inner cylinder 2 or disengaged therefrom.

In the respective embodiments (Figs. 1, 3, 5 to 9) as described in the specification, the body rubber 4 is not bonded to the inner cylinder 2, but in contact therewith. When the inner cylinder 2 is displaced in the twist direction (the direction in which the inner cylinder 2 rotates circumferentially with respect to the outer cylinder 3), or in the prying direction (the direction in which the center axis O2 of the inner cylinder 2 tilts relative to the center axis O3 of the outer cylinder 3 as illustrated in Fig. 4), it is possible to make the body rubber 4 slidable on the inner cylinder 2 as illustrated in Fig. 4. During the displacement in the twist direction or the prying direction, the body rubber 4 hardly or never contributes to the spring stiffness. Compared with the case where the body rubber 4 is bonded to the inner cylinder 2, it is possible to reduce the stiffness in the twist direction and the prying direction. It is therefore possible to further make the inner cylinder 2 easily shakable with respect to the outer cylinder 3 in the twist direction or the prying direction. This makes it possible to improve the performance of the anti-vibration structure for the vehicle suspension system. Compared with the case where the body rubber 4 is bonded to the inner cylinder 2, it is possible to prevent increase in the strain amount owing to elasticity of the body rubber during displacement at the larger torsional angle in the twist direction. It is possible to further suppress deterioration in durability of the body rubber 4.

In the respective embodiments as described in the specification, it is not necessary to provide the low-friction member (for example, the resin member or the like with low frictional coefficient) for a slip part (sliding part) as has been conventionally done. This makes it possible to reduce the number of components.

In the respective embodiments as described in the specification, the body rubber 4 is not bonded to the inner cylinder 2. This hardly influences the displacement in the axially orthogonal direction. Accordingly, the body rubber 4 is capable of exhibiting the high spring stiffness equivalent to or higher than the conventional stiffness upon displacement of the inner cylinder 2 with respect to the outer cylinder 3 in the axially orthogonal direction. This makes it possible to exhibit further excellent performance of the anti-vibration structure for the vehicle suspension system.

In the respective embodiments (Figs. 1, 3, 5 to 9) as described in the specification, the pair of seal members 6 are disposed on both sides of the body rubber 4 in the axial direction as described above. Each of the seal members 6 includes the body part 61 positioned on the outer peripheral surface of the inner cylinder 2, and the lip part 62 that extends axially inward from the body part 61, and comes into contact with the axially outer surface 4s of the body rubber 4. Consequently, the gap G between the inner cylinder 2 and the body rubber 4 becomes the sealed space sealed by the lip parts 62 of the pair of the seal members 6 on both sides. In other words, the pair of seal members 6 secure the seal performance of the gap G (the slip part) between the inner cylinder 2 and the body rubber 4. This makes it possible to suppress external intrusion of dust into the gap G, and further to suppress deterioration in slidability between the body rubber 4 and the inner cylinder 2. Even in the case where the gap G is filled with the lubricant as described later, it is possible to suppress leakage of the lubricant from the sealed space.

As described above, it is possible to reduce the number of components, and to suppress deterioration in durability while securing the seal performance of the slip part.

When the seal members 6 are in the natural state (Figs. 2, 10), preferably, the inner diameter of the body part 61 of the seal member 6 is smaller than the outer diameter of a part of the inner cylinder 2, on which the seal member 6 is disposed in the axial direction (that is, the part which is positioned on the inner peripheral side of the seal member 6). In the state where the seal members 6 are disposed on the inner cylinder 2, the body part 61 of the seal member 6 tightens the outer peripheral surface of the inner cylinder 2 to the inner peripheral side. Accordingly, the resultant tightening force (tension force) of the body part 61 serves to fix the body part 61 more securely onto the inner cylinder 2. This makes it possible to suppress the axially lateral displacement of the seal member 6 on the inner cylinder 2.

The following describes the "natural state" of the seal member 6. As illustrated in Figs. 2, 10, the seal member 6 is not disposed on the inner cylinder 2 in the state where the external force does not act on the seal member 6 (consequently, in the state where the seal member 6 does not expand nor contract).

As illustrated in Figs. 2, 10, preferably, when the seal member 6 is in the natural state, the inner peripheral surface of the lip part 62 of the seal member 6 extends to the outer peripheral side while being directed toward the inward of the inner cylinder 2 in the axial direction (consequently, on any side of the center axis directions of the seal member 6). This facilitates the surface contact of the inner peripheral surface of the lip part 62 of the seal member 6 with the axially outer surface 4s of the body rubber 4 in the state where the seal member 6 is disposed on the inner cylinder 2 (Figs. 1, 3, 5 to 9).

Preferably, in the state where the seal member 6 is disposed on the inner cylinder 2 (Figs. 1, 3, 5 to 9), the inner peripheral surface of the lip part 62 of the seal member 6 comes into surface contact with the axially outer surface 4s of the body rubber 4 entirely.

The inner peripheral surface of the lip part 62 of the seal member 6 is in surface contact with the axially outer surface 4s of the body rubber 4. Compared with the case where only a top end of the lip part 62 of the seal member 6 is in contact with the axially outer surface 4s of the body rubber 4 (in the case where the lip part 62 of the seal member 6 is in line contact with the axially outer surface 4s of the body rubber 4), it is possible to increase the contact area between the lip part 62 and the axially outer surface 4s of the body rubber 4. This allows improvement in the seal performance of the lip part 62 of the seal member 6. Consequently, upon displacement of the inner cylinder 2 with respect to the outer cylinder 3 in the prying direction (Fig. 4), it is possible to alleviate the risk of deteriorating the seal performance, which is caused by separation of the lip part 62 of the seal member 6 from the axially outer surface 4s of the body rubber 4.

From the same perspective, preferably, the lip part 62 of the seal member 6 is structured to be inseparable from the axially outer surface 4s of the body rubber 4 (holding the state in contact with the axially outer surface 4s of the body rubber 4) even if the inner cylinder 2 is displaced with respect to the outer cylinder 3 in the prying direction (Fig. 4).

As illustrated in Figs. 2, 10, preferably, when the seal member 6 is in the natural state, the outer peripheral surface of the lip part 62 of the seal member 6 extends to the outer peripheral side while being directed toward the axially inward of the inner cylinder 2 (consequently, on any side of the center axis directions of the seal member 6). This makes the lip part 62 easily in tight contact with the axially outer surface 4s of the body rubber 4. The seal performance of the lip part 62 can be improved.

As illustrated in Figs. 2, 10, preferably, when the seal member 6 is in the natural state, the lip part 62 is made gradually thin in the radial direction while being directed toward the axially inward of the inner cylinder 2 (consequently, on any side of the center axis directions of the seal member 6, the top end side of the lip part 62). As a result, the lip part 62 becomes likely to increase and decrease its diameter. Then the lip part 62 becomes likely to come into tight contact with the axially outer surface 4s of the body rubber 4. This allows improvement in the seal performance of the lip part 62.

The axial length of the seal member 6 in the natural state (Figs. 2, 10) may be longer than, equal to, or shorter than the axial length of a part of the inner cylinder 2, which ranges from the axially outer surface 4s of the body rubber 4 to the end surface of the inner cylinder 2 in the axial direction.

In the first embodiment as illustrated in Figs. 1 to 4, the axial length of the seal member 6 in the natural state (Figs. 2, 10) is longer than the axial length of the part of the inner cylinder 2, which ranges from the axially outer surface 4s of the body rubber 4 to the end surface of the inner cylinder 2 in the axial direction (see broken line in Fig. 1).

For example, upon assembly of the anti-vibration assembly AS (Fig. 3), the seal member 6 is pushed axially inward until the bracket BR abuts on the end surface of the inner cylinder 2 in the axial direction (see broken line in Fig. 1). Eventually, the end surface on the axially outward of the seal member 6 (that is, the surface of the bracket BR on the axially inner side) is located at the axially same position as that of the end surface of the inner cylinder 2 in the axial direction. The lip part 62 of the seal member 6 is pushed against the axially outer surface 4s of the body rubber 4 while having its diameter widened. In this case, the seal member 6 is securely held between the body rubber 4 and the bracket BR to effectively suppress positional displacement (lateral displacement) of the seal member 6 in the axial direction. Furthermore, it is possible to effectively suppress separation of the lip part 62 of the seal member 6 from the axially outer surface 4s of the body rubber 4. The lip part 62 of the seal member 6 is pushed against the axially outer surface 4s of the body rubber 4 while having its diameter widened. This allows improvement in the seal performance of the seal member 6.

As described in the respective embodiments illustrated in Figs. 1 to 4, 7 to 10, the inner peripheral surface of the body part 61 of the seal member 6 in the natural state (Figs. 2, 10) may extend parallel to the axial direction over an entire area of the body part 61 in the axial direction.

As described in the respective embodiments illustrated in Figs. 1 to 4, 7 to 10, the outer peripheral surface of the inner cylinder 2 may extend parallel to the axial direction over an area ranging from the axially outer surface 4s of the body rubber 4 to the end surface of the inner cylinder 2 in the axial direction.

Alternatively, as described in the respective embodiments illustrated in Figs. 5, 6, the inner cylinder 2 and the body part 61 of the seal member 6 may be engaged with each other. More specifically, a pair of engaged parts 25 may be formed in the outer peripheral surface of the inner cylinder 2 on both sides of the body rubber 4 in the axial direction. Engaging parts 65 may be formed on the inner peripheral surface of the body part 61 of each of the respective seal members 6 such that the engaging parts are engaged with the corresponding engaged parts 25, respectively.

The engaged part 25 of the inner cylinder 2 is positioned in the range from the axially inward of the axial end surface of the inner cylinder 2 to the axially outward of the axially outer surface 4s of the body rubber 4. In the case where the seal member 6 is assembled on the inner cylinder 2, a part of the seal member 6 has its diameter widened while the seal member 6 is inserted axially inward on the outer surface of the inner cylinder 2. Subsequently, when the engaging part 65 reaches the outer peripheral side of the engaged part 25, the corresponding part of the seal member 6 is restored to the inner peripheral side. This allows engagement between the engaging part 65 and the engaged part 25.

Engagement of the inner cylinder 2 with the body part 61 of each of the seal members 6 securely holds the body part 61 of the seal member 6 on the inner cylinder 2. This makes it possible to effectively suppress the positional displacement (lateral displacement) of the seal member 6 in the axial direction. In this case, even if the axial length of the seal member 6 in the natural state (Figs. 2, 10) is equal to or shorter than the axial length of a part of the inner cylinder 2, which ranges from the axially outer surface 4s of the body rubber 4 to the end surface of the inner cylinder 2 in the axial direction (consequently, without depending on the lateral-displacement-restricting function of the brackets BR (Figs. 3, 9) of the anti-vibration assembly AS), the lateral displacement of the seal member 6 can be effectively suppressed. In such a case, upon assembly of the bracket BR, the seal member 6 does not have to be pushed axially inward against the body rubber 4. This makes it possible to improve the assemblability.

In the embodiment as illustrated in Fig. 5, the engaged part 25 of the inner cylinder 2 is formed into a concave shape that dents on the inner peripheral side. The engaging part 65 of the seal member 6 is formed into a convex shape that protrudes to the inner peripheral side. It is also possible to form the engaged part 25 of the inner cylinder 2 into the convex shape that protrudes to the outer peripheral side, and to form the engaging part 65 of the seal member 6 into the concave shape that dents on the outer peripheral side.

Preferably, the engaged part 25 and the engaging part 65 continuously extend over an entire circumference (that is, annularly shaped). However, those parts may extend intermittently in the circumferential direction.

As described in the respective embodiments illustrated in Figs. 5, 6, if the inner cylinder 2 and the seal member 6 are engaged with each other, they may be configured that both the engaged part 25 of the inner cylinder 2 and the engaging part 65 of the seal member 6 have the respective parts extending parallel to the axial direction as described in the embodiment illustrated in Fig. 5. For example, each of the engaged part 25 of the inner cylinder 2 and the engaging part 65 of the seal member 6 is formed to have an axial cross-section with a substantially rectangular shape as described in the embodiment illustrated in Fig. 5.

Referring to the respective embodiments as illustrated in Figs. 5, 6, if the inner cylinder 2 and the seal member 6 are structured to be engaged with each other, each of the engaged part 25 of the inner cylinder 2 and the engaging part 65 of the seal member 6 may be structured to include a gradually extending part to the outer peripheral side while being directed axially inward as described in the embodiment illustrated in Fig. 6. For example, as described in the embodiment illustrated in Fig. 6, each of the engaged parts 25 of the inner cylinder 2 and the engaging parts 65 of the seal member 6 may be structured to include a part gradually extending linearly to the outer peripheral side while being directed axially inward. This may improve insertion performance (assemblability) upon insertion of the seal member 6 axially inward on the inner cylinder 2.

As described in the respective embodiments illustrated in Figs. 7, 8, the anti-vibration structure 1 may further be provided with a pair of band members 7.

Each of the paired band members 7 is similarly structured. In the specification, unless otherwise specifically noted, the band member 7 will be described with respect to each of the band members 7.

The band member 7 extends over an entire circumference along the circumferential direction to form an annular shape.

Preferably, the band member 7 is made of a material harder than the one for forming the seal member 6. Examples of the material for forming the band member 7 include rubber, resin, metal, and the like.

As described in the embodiment illustrated in Fig. 7, the band member 7 may be disposed on the outer peripheral surface of the body part 61 of the seal member 6.

In the above case, preferably, the band member 7 has its inner diameter equal to or smaller than (more preferably, smaller than) an outer diameter of the body part 61 of the seal member 6 in the state where the seal member 6 is disposed on the inner cylinder 2 (Fig. 7). In this case, the band member 7 may be assembled on the seal member 6 which has been precedingly applied onto the inner cylinder.

Alternatively, the band member 7 may be provided inside the body part 61 of the seal member 6 as described in the embodiment illustrated in Fig. 8. In this case, for example, when manufacturing the seal member 6, the band member 7 may be preliminarily inserted to the inside of the mold for molding the seal member 6, and then press-fitted integrally with the seal member 6 on the inner cylinder 2.
Provision of the band member 7 allows suppression of increase in the diameter or displacement of the body part 61 of the seal member 6. This makes it possible to securely hold the body part 61 of the seal member 6 on the inner cylinder 2. This makes it possible to effectively suppress the positional displacement (lateral displacement) of the seal member 6 in the axial direction. In this case, even if the axial length of the seal member 6 in the natural state (Figs. 2, 10) is equal to or shorter than the axial length of a part of the inner cylinder 2, which ranges from the axially outer surface 4s of the body rubber 4 to the end surface of the inner cylinder 2 in the axial direction (consequently, without depending on the lateral-displacement-restricting function of the brackets BR (Figs. 3, 9) of the anti-vibration assembly AS), the lateral displacement of the seal member 6 can be effectively suppressed. In such a case, upon assembly of the bracket BR, the seal member 6 does not have to be pushed axially inward against the body rubber 4. This makes it possible to improve the assemblability.

The body part 61 of the seal member 6 does not have to be adhesively bonded to the inner cylinder 2.

Alternatively, the body part 61 of the seal member 6 may be adhesively bonded to the inner cylinder 2. In this case, the lateral displacement of the seal member 6 can be further suppressed.

As described in the respective embodiments illustrated in Figs. 1 to 8, the seal member 6 may be only composed of the body part 61 and the lip part 62.

Alternatively, as described in the embodiment illustrated in Figs. 9, 10, the seal member 6 may be further provided with a collar part 63 that extends from the body part 61 to the outer peripheral side.

The collar part 63 of the seal member 6 is formed to have its axially inner surface in contact (preferably, surface contact) with the axially outer surface of the outer cylinder 3 in the state where the seal member 6 is assembled on the inner cylinder 2 (Fig. 9). Preferably, the collar part 63 extends over the entire circumference along the circumferential direction to form an annular shape.

The collar part 63 of the seal member 6 ensures to protect the lip part 62 of the seal member 6 by blocking the splashing muddy water or flying pebbles directed to the lip part 62 of the seal member 6 while the vehicle is running. It is possible to suppress hitting of muddy water, pebbles, and the like on the lip part 62. It is possible to improve the seal performance of the seal member 6.

The use of the collar part 63 is preferable especially when the anti-vibration structure 1 is applied to the vehicle (mining vehicle, construction vehicle, and the like) configured to be suitable for running on the rough road with muddy water, pebbles, and the like.

Preferably, when the seal member 6 is in the natural state (Fig. 10), the collar part 63 gradually extends to the axially inward of the inner cylinder 2 while being directed toward the outer peripheral side (further to the side of the lip part 62 in the center axis direction of the seal member 6). In this case, in the state where the seal member 6 is assembled on the inner cylinder 2 (Fig. 9), the collar part 63 is brought into abutment on the axially outer surface of the outer cylinder 3, and is further in tight contact with the axially outer surface of the outer cylinder 3. This makes it possible to improve the seal performance between the collar part 63 and the axially outer surface of the outer cylinder 3.

Preferably, the collar part 63 of the seal member 6 is structured to be inseparable from the axially outer surface of the outer cylinder 3 (kept in contact with the axially outer surface of the outer cylinder 3) even if the inner cylinder 2 is displaced with respect to the outer cylinder 3 in the prying direction (Fig. 4).

From the above-described aspect, preferably, the collar part 63 is structured to extend to the outer peripheral side from the outer peripheral surface of the outer cylinder 3 in the state (Fig. 9) where the seal member 6 is assembled on the inner cylinder 2.

From the same perspective, in the state where the anti-vibration structure 1 is press-fitted with the inner peripheral surface of the tubular part TP of the suspension link arm LA (that is, the anti-vibration assembly AS (Fig. 9)), preferably, the collar part 63 is structured to have its axially inner surface not only in contact with the axially outer surface of the outer cylinder 3, but also in contact (preferably, surface contact) with the axially outer surface of the tubular part TP of the suspension link arm LA.

It is preferable to have the lubricant intervening between the inner cylinder 2 and the body rubber 4. In this case, the gap G between the inner cylinder 2 and the body rubber 4 is filled with the lubricant.

As described above, actually, the gap G is substantially or completely in the closed state. Accordingly, the lubricant layer actually becomes significantly thin. In this case, the inner cylinder 2 and the body rubber 4 come into contact with each other via the lubricant.

For example, the lubricant is composed of lubricating oil.

As the lubricant intervenes between the inner cylinder 2 and the body rubber 4, the frictional resistance between the inner cylinder 2 and the body rubber 4 may be reduced. This allows the body rubber 4 to be easily slidable with respect to the inner cylinder 2. Accordingly, the inner cylinder 2 is likely to be further shakable in the twist direction or prying direction.

The lubricant does not have to intervene between the inner cylinder 2 and the body rubber 4.

As described in the respective embodiments illustrated in Figs. 1 to 10, preferably, the outer peripheral surface of the inner cylinder 2 has a bulge shape part 23 that is bulge-like formed, protruding to the outer peripheral side. In this case, the part of the inner peripheral surface of the body rubber 4, which comes into contact with the bulge shape part 23 of the inner cylinder 2 has a concave shape with a dent to the outer peripheral side to be adaptable to the bulge shape part 23. Preferably, the bulge shape part 23 extends over the entire circumference to form an annular shape.

If the outer peripheral surface of the inner cylinder 2 has the bulge shape part 23, it is possible to suppress the lateral displacement of the body rubber 4 with respect to the inner cylinder 2 in the axial direction. In this case, the body rubber 4 in the axially orthogonal direction becomes relatively thin on the part corresponding to the bulge shape part 23 in the axially orthogonal direction. This makes it possible to impart the higher spring stiffness to the body rubber 4 against the relative displacement of the inner cylinder 2 in the axially orthogonal direction.

In this case, as described in the respective embodiments illustrated in Figs. 1 to 10, the outer peripheral surface of the inner cylinder 2 may have the bulge shape part 23, and a pair of non-bulge shape parts 24, which are positioned on both sides of the bulge shape part 23 in the axial direction, respectively, and are non-bulge shaped. As described in the respective embodiments illustrated in Figs. 1 to 10, the non-bulge shape part 24 may have at least a part formed into a linear shape (for example, cylindrical shape) along the axial direction.

If the outer peripheral surface of the inner cylinder 2 has the bulge shape part 23 as described above, the bulge shape of the bulge shape part 23 may be arbitrarily formed so long as it has a shape protruding to the outer peripheral side.

Preferably, the bulge shape of the bulge shape part 23 includes a part with a curved shape as described in the respective embodiments illustrated in Figs. 1 to 10. In this case, when the inner cylinder 2 is displaced in the prying direction, the body rubber 4 becomes likely to be more slidable with respect to the bulge shape part 23 of the inner cylinder 2. The bulge shape of the bulge shape part 23 may be formed into only a curved shape.

Preferably, the bulge shape of the bulge shape part 23 is formed into the one with no angular section as described in the respective embodiments illustrated in Figs. 1 to 10. In this case, when the inner cylinder 2 is displaced in the prying direction, the body rubber 4 becomes likely to be more slidable with respect to the bulge shape part 23 of the inner cylinder 2.

Preferably, the bulge shape of the bulge shape part 23 gradually extends to the outer peripheral side while being directed toward the center of the inner cylinder 2 in the axial direction as described in the respective examples illustrated in Figs. 1 to 10. In this case, when the inner cylinder 2 is displaced in the prying direction, the body rubber 4 becomes likely to be more slidable with respect to the bulge shape part 23 of the inner cylinder 2.

The bulge shape of the bulge shape part 23 may be formed into a spherical shape, for example.

In the case where the outer peripheral surface of the inner cylinder 2 has the bulge shape part 23 as described above, the inner peripheral surface of a part of the outer cylinder 3, which corresponds to the bulge shape part 23 of the inner cylinder 2 in the axial direction (that is, the part positioned at the radially outward of the bulge shape part 23) may be structured to extend to the inner peripheral side while being directed axially outward, and to be curved to form the convex shape on the outer peripheral side.
Preferably, the outer peripheral surface of the outer cylinder 3 extends parallel to the axial direction.

As described in the respective embodiments illustrated in Figs. 1 to 10, preferably, the outer peripheral surface of the inner cylinder 2 has a pair of circumferential grooves 27 each extending in the circumferential direction on both sides of the axial center of the inner cylinder 2. Furthermore, the inner peripheral surface of the body rubber 4 includes a pair of projection parts 47 structured to be fitted with the pair of circumferential grooves 27 on both outer end parts of the body rubber 4 in the axial direction.

Preferably, the pair of circumferential grooves 27 extend over the entire circumference, and are annularly formed.

The pair of projection parts 47 project to the inner peripheral side, and extend in the circumferential direction. Preferably, the pair of projection parts 47 extend over the entire circumference, and are annularly formed.

In this case, the body rubber 4 has the projection parts 47 on both outer end parts in the axial direction. This makes it possible to secure each radial thickness of both outer end parts of the body rubber 4 in the axial direction for a prolonged time. Even when the inner cylinder 2 is displaced with respect to the outer cylinder 3 in the prying direction (Fig. 4), it is possible to further effectively suppress separation of the lip part 62 of the seal member 6 from the axially outer surface 4s of the body rubber 4.

In this case, the body rubber 4 becomes resistant to the lateral displacement with respect to the inner cylinder 2.

If outer peripheral surface of the inner cylinder 2 has the bulge shape part 23, preferably, the pair of circumferential grooves 27 are positioned on both sides of the bulge shape part 23 of the outer peripheral surface of the inner cylinder 2 in the axial direction, respectively.

As described in the respective embodiments illustrated in Figs. 1 to 10, the non-bulge shape part 24 on the outer peripheral surface of the inner cylinder 2 includes the circumferential groove 27 and a part extending axially outward from the circumferential groove 27. The part of the non-bulge shape part 24, which extends axially outward from the circumferential groove 27 may extend parallel to the axial direction substantially entirely as described in the respective embodiments illustrated in Figs. 1 to 4, 7 to 10.

However, the circumferential groove 27 and the projection part 47 do not have to be provided.

Hereafter, an example of the method of manufacturing the anti-vibration structure 1 in the present invention will be described.

In the manufacturing method, for example, in the injection process, the un-vulcanized rubber for forming the body rubber 4 is injected into the mold in which the inner cylinder 2 and the outer cylinder 3 are set. In the vulcanization process, the body rubber 4 is vulcanization molded using the mold to form the part of the anti-vibration structure 1, which includes the inner cylinder 2, the body rubber 4, and the outer cylinder 3. Thereafter, the pair of seal members 6 on both sides of the body rubber 4 in the axial direction are inserted axially inward from the axially outer side on the outer peripheral surface of the inner cylinder 2 such that those components are assembled. Then, the anti-vibration structure 1 can be obtained by the above-described process.

For example, if the process for facilitating bonding of the body rubber 4 to the surface of the inner cylinder 2 (application of the adhesive, or the like) is not executed before execution of the vulcanization process, it is possible to prevent bonding of the body rubber 4 to the inner cylinder 2 in the vulcanization process.

In the case of intervening the lubricant between the inner cylinder 2 and the body rubber 4 of the anti-vibration structure 1, it is preferable to execute the lubricant injection process after the vulcanization process.

The lubricant injection process may be executed by preliminarily forming an injection hole H (Fig. 1 and the like) in the anti-vibration structure 1. The injection hole H communicates the gap G between the inner cylinder 2 and the body rubber 4 with the outside of the anti-vibration structure 1. The injection hole H may be formed to pass through the outer cylinder 3 and the body rubber 4 of the anti-vibration structure 1 between the gap G and the outside of the anti-vibration structure 1 as exemplified by Fig. 1 and the like. In this case, an arbitrary method may be implemented for preliminarily forming the injection hole H. For example, a through hole is preliminarily formed in a point corresponding to the outer cylinder 3, and a protrusion for forming the injection hole H is formed in the mold to be used for the injection process and the vulcanization process. In the lubricant injection process, the lubricant is injected from the outside into the gap G between the inner cylinder 2 and the body rubber 4 through the injection hole H.

### Industrial Applicability

Preferably, the anti-vibration structure according to the present invention is applied to the vehicle suspension system, for example, MacPherson strut suspension system. Preferably, for example, the anti-vibration structure according to the present invention is formed as the bush used for the link mechanism (suspension link arm and the like) of the vehicle suspension system (for example, Macpherson strut suspension system). However, the anti-vibration structure may be provided for the strut mount of the vehicle suspension system (for example, Macpherson strut suspension system).

### List of Reference Signs

1: anti-vibration structure, 2: inner cylinder, 23: bulge shape part, 24: non-bulge shape part, 25: engaged part, 27: circumferential groove, 3: outer cylinder, 4: body rubber, 4s: axially outer surface, 47: projection part, 6: seal member, 61: body part, 62: lip part, 63: collar part, 65: engaging part, 7: band member, H: injection hole, O2: center axis of inner cylinder (center axis of anti-vibration structure), O3: center axis of inner cylinder, G: gap, AS: anti-vibration assembly, Fa, Fb: fastener, BR: bracket, LA, suspension link arm, TP: tubular part

## Claims

1. An anti-vibration structure, comprising:
an inner cylinder;
an outer cylinder;
a body rubber disposed between the inner cylinder and the outer cylinder; and
a pair of seal members which are provided on an outer peripheral surface of the inner cylinder on both sides of the body rubber in an axial direction, each of the seal members being made from an elastic body and having a cylindrical shape, wherein
an inner peripheral surface of the body rubber is not bonded to the inner cylinder, but is in contact with the inner cylinder, and
each of the seal members has:
a body part positioned on the outer peripheral surface of the inner cylinder; and
a lip part extending axially inward from the body part, and coming into contact with an axially outer surface of the body rubber.

2. The anti-vibration structure according to claim 1, wherein an inner peripheral surface of the lip part of each of the seal members extends to an outer peripheral side while being directed axially inward, and comes into surface contact with the axially outer surface of the body rubber.

3. The anti-vibration structure according to claim 1, wherein
the outer peripheral surface of the inner cylinder has a pair of engaged parts on both sides of the body rubber in the axial direction; and
inner peripheral surfaces of the body parts of the seal members include engaging parts to be engaged with the corresponding engaged parts, respectively.

4. The anti-vibration structure according to claim 1, further comprising a pair of band members provided on each outer peripheral surface of or inside the body parts of the pair of seal members.

5. The anti-vibration structure according to claim 1, wherein
each of the seal members further includes a collar part extending to an outer peripheral side from the body part; and
the collar part of each of the seal members is structured to come into contact with an axially outer surface of the outer cylinder.

6. The anti-vibration structure according to claim 1, wherein
the outer peripheral surface of the inner cylinder has a pair of circumferential grooves, each extending in a circumferential direction; and
the inner peripheral surface of the body rubber has a pair of projection parts structured to be fitted with the pair of circumferential grooves, respectively on axially outer end parts.

7. The anti-vibration structure according to claim 1, wherein the outer peripheral surface of the inner cylinder has a bulge shape part with a bulge shape projecting to an outer peripheral side on an inner peripheral side of the body rubber.

8. The anti-vibration structure according to claim 1, wherein the anti-vibration structure is formed as a bush used for a link mechanism of a suspension system.
